# EUROPÄISCHE PATENTSCHRIFT

(11) **EP 2 557 969 B1**
(45) Veröffentlichungstag und Bekanntmachung des Hinweises auf die Patenterteilung: **03.06.2015**
(21) Anmeldenummer: 11715481.5
(22) Anmeldetag: 13.04.2011
(51) Int. Cl.: H05B 6/12, A47J 27/00, A47J 27/088, A47J 27/022, H03K 17/95, H05B 3/74

(54) **KOCHGEFÄSS, HEIZEINRICHTUNG UND KOCHSYSTEM**
COOKING VESSEL, HEATING DEVICE AND COOKING SYSTEM
RÉCIPIENT DE CUISSON, DISPOSITIF DE CHAUFFAGE ET SYSTÈME DE CUISSON

(30) Priorität: 15.04.2010 DE 102010027833
(43) Veröffentlichungstag der Anmeldung: 20.02.2013
(73) Patentinhaber: E.G.O. Elektro-Gerätebau GmbH, 75038 Oberderdingen (DE)
(72) Erfinder: SCHILLING, Wilfried, 76703 Kraichtal (DE); WÄCHTER, Ulrich, 75031 Eppingen (DE)
(74) Vertreter: Patentanwälte Ruff, Wilhelm, Beier, Dauster & Partner
(86) Internationale Anmeldenummer: PCT/EP2011/055852
(87) Internationale Veröffentlichungsnummer: WO 2011/141261

(56) Entgegenhaltungen:
- DE-A1-102005 047 186
- DE-C1- 3 733 108
- US-A1- 2010 147 832

## Beschreibung

Die Erfindung betrifft ein Kochgefäß, eine Heizeinrichtung zur Erwärmung des Kochgefäßes und ein Kochsystem.

Zur Steuerung bzw. Regelung von automatischen Kochprozessen auf Induktionskochzonen ist eine möglichst genaue Temperaturmessung eines Kochgefäßbodens notwendig. Zur Messung der Kochgefäßbodentemperatur sind Verfahren bekannt, welche temperaturabhängige elektrische und/oder magnetische Kochgefäßbodenzustände erfassen und in Abhängigkeit davon die Kochgefäßbodentemperatur berechnen.

Die Berechnung der Temperatur aus den erfassten elektrischen und/oder magnetischen Kochgefäßbodenzuständen ist jedoch von Parametern abhängig, die von einem Typ des Kochgefäßes abhängen. Daher sollten diejenigen typabhängigen Parameter bzw. Eigenschaften des Kochgefäßbodens bekannt sein, die für eine derartige Temperaturmessung relevant sind.

Darüber hinaus kann es sinnvoll sein, den Betrieb einer Heizeinrichtung zur Erwärmung des Kochgefäßes kochgefäßtypabhängig zu steuern.

Die US 2010/0147832 A1 zeigt ein Kochgefäß mit einer Kochgefäßtyp-Kodiereinrichtung, die als Schwingkreis ausgebildet sein kann.

Die DE 37 33 108 C1 zeigt ein Topferkennungssystem, mittels dem erkannt werden kann, ob sich ein Topf auf einer Kochstelle befindet. Es findet hierbei weder eine Kochgefäßtyp-Identifizierung statt, noch ist dem Kochgefäß eine Kochgefäßtyp-Kodiereinrichtung zugeordnet.

Die DE 10 2005 047 186 A1 zeigt eine Schaltungsanordnung zur Topf- und Berührungserkennung, wobei ebenfalls keine Kochgefäßtyp-Kodierung stattfindet.

### Aufgabe und Lösung

Der Erfindung liegt die Aufgabe zugrunde, ein Kochgefäß, eine Heizeinrichtung sowie ein Kochsystem zur Verfügung zu stellen, die eine möglichst einfache Kochgefäßtyp-Kodierung ermöglichen, um beispielsweise im Zuge eines Kochvorgangs den Kochgefäßtyp einfach ermitteln zu können, um dann anhand des ermittelten Kochgefäßtyps die für die Kochgefäßerwärmung relevanten Eigenschaften des Kochgefäßes zu berücksichtigen.

Die Erfindung löst diese Aufgabe durch ein Kochgefäß mit den Merkmalen des Anspruchs 1, eine Heizeinrichtung mit den Merkmalen des Anspruchs 6 und ein Kochsystem mit den Merkmalen des Anspruchs 9.

Bevorzugte Ausführungsformen sind Gegenstand der Unteransprüche, deren Wortlaut hiermit durch Bezugnahme zum Inhalt der Beschreibung gemacht wird.

Das erfindungsgemäße Kochgefäß weist einen vorgegebenen Kochgefäßtyp auf. Einem vorgegebenen Kochgefäßtyp sind beispielsweise Kochgefäßtypspezifische elektrische und magnetische Kochgefäßbodeneigenschaften zugeordnet. Unterschiedliche Kochgefäßtypen können sich beispielsweise in ihren diesbezüglichen Eigenschaften unterscheiden. Das Kochgefäß umfasst eine Kochgefäßtyp-Kodiereinrichtung, die den Kochgefäßtyp des Kochgefäßes kodiert bzw. abbildet oder darstellt. Die Kochgefäßtyp-Kodiereinrichtung ist ein passiver, elektrischer Schwingkreis, wobei eine Resonanzfrequenz des Schwingkreises den Kochgefäßtyp des Kochgefäßes kodiert. Unterschiedliche Kochgefäßtypen weisen hierbei unterschiedliche Resonanzfrequenzen auf, wodurch anhand der spezifischen Resonanzfrequenz der jeweilige Kochgefäßtyp des Kochgefäßes einfach ermittelbar ist.

Der Schwingkreis ist als Dünnschichtstruktur oder als Dickschichtstruktur, insbesondere am oder im Bereich des Kochgefäßbodens, gebildet.

In einer Weiterbildung ist der Schwingkreis ein LC-Schwingkreis, d.h. der Schwingkreis umfasst eine Spule bzw. Induktivität L und einen Kondensator bzw. eine Kapazität C.

In einer Weiterbildung weist ein Kochgefäßboden eine elektrisch isolierende Schicht auf, wobei auf der elektrisch isolierenden Schicht eine Leiterbahnstruktur aufgebracht ist, insbesondere aufgedruckt ist, die den Schwingkreis bildet.

In einer Weiterbildung umfasst der Schwingkreis einen Kondensator, der als diskretes Bauelement gebildet ist.

In einer Weiterbildung weist das Kochgefäß eine innere Schale und eine äußere Schale auf, wobei die innere Schale induktiv erwärmbar ist und die äußere Schale zumindest teilweise aus thermisch und/oder elektrisch isolierendem Material besteht, wobei der Schwingkreis aus einem leitfähigen Material auf einer Oberfläche der äußeren Schale gebildet ist, die aus dem elektrisch isolierenden Material besteht und die der inneren Schale zugewandt ist.

Die erfindungsgemäße Heizeinrichtung ist zur Erwärmung des oben genannten Kochgefäßes ausgebildet. Die Heizeinrichtung ist weiter dazu ausgebildet, die Resonanzfrequenz des Schwingkreises zu bestimmen, aus der bestimmten Resonanzfrequenz den Kochgefäßtyp zu ermitteln und in Abhängigkeit von dem ermittelten Kochgefäßtyp Erwärmungsparameter in Form einer Ansteuerfrequenz, einer Ansteueramplitude und/oder von Kalibriergrößen kochgefäßtypspezifisch einzustellen.

In einer Weiterbildung ist die Heizeinrichtung eine Induktionsheizeinrichtung, die ein mittelfrequentes magnetisches Wechselfeld erzeugt, beispielsweise ein Wechselfeld in einem Frequenzbereich von 10 kHz bis 100 kHz, welches zur Erwärmung des Kochgefäßes dient, wobei bei der Erzeugung des magnetischen Wechselfelds entstehende Schaltflanken zur Anregung des Schwingkreises dienen.

In einer Weiterbildung umfasst die Heizeinrichtung eine Empfangseinrichtung, die von dem Schwingkreis erzeugte Signale empfängt, um die Resonanzfrequenz zu bestimmen.

Das erfindungsgemäße Kochsystem umfasst ein oben beschriebenes Kochgefäß sowie eine oben beschriebene Heizeinrichtung.

Vorteilhafte Ausführungsformen der Erfindung sind in den Zeichnungen schematisch dargestellt und werden nachfolgend beschrieben. Hierbei zeigt/zeigen:

### Kurzbeschreibung der Zeichnungen

- Fig. 1: eine exemplarische Darstellung eines erfindungsgemäßen Kochsystems,
- Fig. 2: eine weitere Ausführungsform eines erfindungsgemäßen Kochsystems und
- Fig. 3: eine Draufsicht auf einen Schwingkreis zur Kochgefäßtyp-kodierung.

### Detaillierte Beschreibung der Zeichnungen

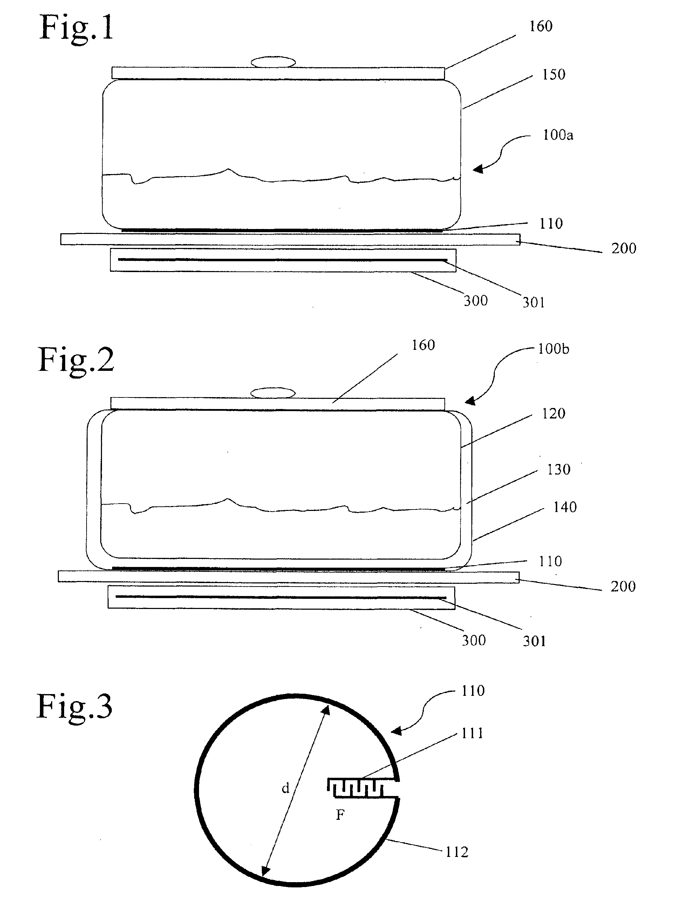

Fig. 1 zeigt einen Ausschnitt eines erfindungsgemäßen Kochsystems mit einem Kochgefäß 100a und einer Heizeinrichtung 300.

Das Kochgefäß ist ein Topf mit einer Topfwandung 150, auf dem ein Deckel 160 angeordnet ist. Ein Boden des Topfs bzw. der Topfwandung 150 besteht aus ferromagnetischem Material, um eine induktive Erwärmung des Topfbodens zu ermöglichen.

Außen am Topfboden ist eine Kochgefäßtyp-Kodiereinrichtung in Form eines passiven, elektrischen LC-Schwingkreises 110 vorgesehen, wobei eine Resonanzfrequenz des LC-Schwingkreises 110 den Kochgefäßtyp des Kochgefäßes 100a kodiert. Die Resonanzfrequenz des gezeigten LC-Schwingkreises 110 kann beispielsweise 10 MHz betragen. Dem gezeigten Kochgefäßtyp bzw. der Resonanzfrequenz von 10 MHz sind kochgefäßtypspezifische Eigenschaften zugeordnet, die beispielsweise elektrische und magnetische Eigenschaften des Kochgefäßbodens betreffen, die für eine induktive Erwärmung des Kochgefäßbodens durch die Heizeinrichtung 300 relevant sind.

Der LC-Schwingkreis 110 kann als Dünnschichtstruktur oder als Dickschichtstruktur auf dem Kochgefäßboden gebildet sein. Zwischen dem Schwingkreis 110 und dem Kochgefäßboden kann eine nicht gezeigte, elektrisch isolierende Schicht angeordnet sein, wobei auf dieser elektrisch isolierenden Schicht eine Leiterbahnstruktur aufgebracht ist, beispielsweise aufgedruckt ist, die den Schwingkreis 110 bildet.

Das Kochgefäß 100a wird im Betrieb auf ein herkömmliches Glaskeramikkochfeld 200 gestellt, wobei unterhalb des Glaskeramikkochfelds die Heizeinrichtung 300 angeordnet ist. Die Heizeinrichtung 300 ist als Induktionsheizeinrichtung 300 ausgebildet und umfasst eine herkömmliche, spiralig gewickelte Induktionsheizspule 301, die mittels eines herkömmlichen, nicht gezeigten Umrichters angesteuert ist, um ein mittelfrequentes magnetisches Wechselfeld zu erzeugen, dass in dem ferromagnetischen Topfboden Wirbelströme und Ummagnetisierungsverluste erzeugt, wodurch der Topfboden erwärmt wird. Bei der Erzeugung des magnetischen Wechselfelds entstehen Schaltflanken, die zur Anregung des Schwingkreises 110 dienen.

Die Heizeinrichtung 300 umfasst eine nicht näher dargestellte Empfangseinrichtung, beispielsweise mit einer Empfangsantenne, die dazu ausgebildet ist, durch den Schwingkreis 110 erzeugte Signale zu empfangen.

Während des Betriebs der Induktionsheizeinrichtung 300 kann beispielsweise in Heizzeitintervallen ein magnetisches Wechselfeld erzeugt werden, wobei zur Bestimmung der Resonanzfrequenz des Schwingkreises 110 der Heizbetrieb in Messzeitintervallen kurz unterbrochen werden kann, um den Schwingkreis 110 mit seiner Resonanzfrequenz schwingen zu lassen, wobei in diesen Messzeitintervallen eine Bestimmung der Resonanzfrequenz in der Heizeinrichtung 300 erfolgt. Aufgrund des großen Abstandes der beiden Arbeitsfrequenzen von Vorzugsweise 20kHz bei der Induktiven Heizeinrichtung 300 und 10MHz bei der Resonanzfrequenz des Schwingkreises 110 kann jedoch auch während des Betriebs der Heizung, d.h. während eines Heizzeitintervalls, die Resonanzfrequenz gemessen werden.

Die Heizeinrichtung 300 ist dazu ausgebildet, aus der bestimmten Resonanzfrequenz den Kochgefäßtyp des Kochgefäßes 100a zu bestimmen und in Abhängigkeit hiervon Erwärmungsparameter kochgefäßtypspezifisch einzustellen, um eine optimale Erwärmung des Kochgefäßes 100a zu ermöglichen.

Fig. 2 zeigt eine zweite Ausführungsform eines Kochsystems mit einem zweischaligen Kochgefäß 100b, wobei die verbleibenden Komponenten denen in Fig. 1 entsprechen.

Das in Fig. 2 gezeigte Kochgefäß weist eine innere Schale 120 auf, die zumindest in ihrem Bodenbereich aus ferromagnetischem Material besteht und somit induktiv erwärmbar ist. Die innere Schale 120 ist umgeben von einer äußeren Schale 140, die aus thermisch und elektrisch isolierendem Material besteht. Zwischen den Schalen 120 und 140 ist eine isolierende Schicht 130 eingebracht. Der LC-Schwingkreis 110 ist bei dieser Ausführungsform im Bodenbereich auf einer Oberfläche der äußeren Schale 140 gebildet, die der inneren Schale 120 zugewandt ist.

Fig. 3 zeigt eine Ausführungsform des in den Figuren 1 und 2 gezeigten Schwingkreises 110 mit einer Spulenwindung 112 und einem kammförmig aufgebauten Kondensator 111. Die spezifische Resonanzfrequenz des gezeigten Schwingkreises 110 kann variiert werden, indem ein Durchmesser d der Spulenwindung 112 und/oder eine Kondensatoroberfläche F verändert wird.

Den gezeigten Ausführungsformen ist gemeinsam, das zur Kochgefäßtypidentifikation in das Kochgefäß ein passiver elektrischer Schwingkreis integriert ist, der mittels hochfrequenter Schaltimpulse der Induktionsheizeinrichtung 300 zum Schwingen angeregt wird. Der Schwingkreis 110 bildet gleichzeitig auch eine Sendeantenne, deren abgestrahlte Signale in der Induktionsheizeinrichtung 300 empfangen werden können, wodurch eine Identifikation des Kochgefäßtyps möglich ist.

Verschiedene Kochgefäßtypen weisen aufgrund einer unterschiedlichen Dimensionierung der jeweils zugehörigen Schwingkreise unterschiedliche d.h. kochgefäßtypspezifische Resonanzfrequenzen auf.

Die Induktionsheizeinrichtung 300 bzw. deren Empfangseinheit verfügt beispielsweise über einen abstimmbaren, selektiven Empfänger, der Störungen aufgrund eines Betriebs der Induktionsheizeinrichtung 300 unterdrückt. Aufgrund der empfangenen, für einen Kochgefäßtyp bzw. eine Kochgefäßart typischen Frequenz kann der Typ identifiziert und ein zugehöriger Parametersatz ausgewählt werden.

Der Schwingkreis 110 kann unterschiedlich realisiert sein. So kann beispielsweise auf der Unterseite des Kochgefäßbodens eine isolierende Schicht und darauf eine Leiterbahnstruktur aufgedruckt sein, die den Schwingkreis 110 mit seinen induktiven und kapazitiven Komponenten bildet. Unterschiedliche Frequenzen können durch Variation der geometrischen Anordnung erzielt werden.

Der Schwingkreis 110 kann beispielsweise dadurch erzeugt werden, dass eine vollflächige, elektrisch leitende Beschichtung, die auf einer elektrisch isolierenden Lage aufgebracht ist, mittels eines Lasers derart strukturiert wird, dass eine oder mehrere Windungen gebildet werden, die zusammen mit einem als diskretes Bauteil eingebrachten Kondensator den Schwingkreis 110 bilden. Anstatt eines diskreten Kondensator-Bauteils kann auch eine parasitäre Kapazität der Windung bzw. der Windungen als Schwingkreiskondensator dienen. Alternativ oder zusätzlich kann eine kammförmig ineinander greifende Struktur den Kondensator bilden, siehe hierzu auch Fig. 3.

Eine Anregung des Schwingkreises 110 kann durch die beim herkömmlichen Betrieb der Induktionsheizeinrichtung 300 entstehenden Schaltflanken erfolgen. Alternativ oder zusätzlich kann der Schwingkreis 110 durch einen separat vorzusehenden Impulsgenerator angeregt werden. Die Resonanzfrequenz des Schwingkreises 110 kann mittels eines selektiven Empfängers in der Induktionsheizeinrichtung 300 bestimmt werden.

Der Schwingkreis kann beispielsweise auf dem Kochgefäßboden als Dick- oder Dünnschichtstruktur gebildet sein. Der Schwingkreis kann alternativ auf dem Topfboden durch Kupfer- oder Aluminiumfolie und einen diskreten Kondensator gebildet sein.

Der Schwingkreis kann neben seiner Typkodierungsfunktion auch zu einer Messung der Temperatur des Kochgefäßbodens verwendet werden. Hierbei kann eine Temperaturabhängigkeit der Resonanzfrequenz des Schwingkreises 110 ausgewertet werden, wobei die temperaturbedingte Resonanzfrequenzänderung so gering ist, dass temperaturunabhängig immer derselbe Kochgefäßtyp angezeigt wird.

Die gezeigte Heizeinrichtung und das gezeigte Kochsystem kann auch mit Kochgefäßen arbeiten, die keine Kochgefäßtyp-Kodiereinrichtung aufweisen. Wenn detektiert wird, dass keine Kochgefäßtyp-Kodiereinrichtung vorhanden ist, kann beispielsweise auf ein Normalprogramm umgeschaltet werden

Die gezeigten Ausführungsformen ermöglichen eine einfache Kochgefäßtyp-Kodierung, anhand derer die für die Kochgefäßerwärmung relevanten Eigenschaften des Kochgefäßes von einer Heizeinrichtung einfach ermittelbar sind.

## Patentansprüche

1. Kochgefäß (100a, 100b), das einem vorgegebenen Kochgefäßtyp zugehört, umfassend:
- eine Kochgefäßtyp-Kodiereinrichtung, die den Kochgefäßtyp des Kochgefäßes kodiert, wobei
- die Kochgefäßtyp-Kodiereinrichtung ein passiver, elektrischer Schwingkreis (110) ist, wobei eine Resonanzfrequenz des Schwingkreises den Kochgefäßtyp des Kochgefäßes kodiert, **dadurch gekennzeichnet, dass**
- der Schwingkreis als Dünnschichtstruktur oder als Dickschichtstruktur, insbesondere am Kochgefäßboden, gebildet ist.

2. Kochgefäß nach Anspruch 1, **dadurch gekennzeichnet, dass** der Schwingkreis ein LC-Schwingkreis ist.

3. Kochgefäß nach einem der vorhergehenden Ansprüche, **dadurch gekennzeichnet, dass** ein Kochgefäßboden eine elektrisch isolierende Schicht aufweist, wobei auf der elektrisch isolierenden Schicht eine Leiterbahnstruktur aufgebracht ist, insbesondere aufgedruckt ist, die den Schwingkreis bildet.

4. Kochgefäß nach einem der vorhergehenden Ansprüche, **dadurch gekennzeichnet, dass** der Schwingkreis einen Kondensator als diskretes Bauelement umfasst.

5. Kochgefäß nach einem der vorhergehenden Ansprüche, **dadurch gekennzeichnet, dass** das Kochgefäß eine innere Schale und eine äußere Schale aufweist, wobei die innere Schale induktiv erwärmbar ist und die äußere Schale zumindest teilweise aus thermisch und elektrisch isolierendem Material besteht, wobei der Schwingkreis aus einem leitfähigen Material auf einer Oberfläche der äußeren Schale gebildet ist, die aus dem elektrisch isolierenden Material besteht und die der inneren Schale zugewandt ist.

6. Heizeinrichtung zur Erwärmung eines Kochgefäßes nach einem der Ansprüche 1 bis 5,
- wobei die Heizeinrichtung dazu ausgebildet ist, die Resonanzfrequenz des Schwingkreises zu bestimmen und aus der bestimmten Resonanzfrequenz den Kochgefäßtyp zu ermitteln, **dadurch gekennzeichnet, dass**
- die Heizeinrichtung weiter dazu ausgebildet ist, in Abhängigkeit von dem ermittelten Kochgefäßtyp Erwärmungsparameter in Form einer Ansteuerfrequenz, in Form einer Ansteueramplitude und/oder in Form von Kalibriergrößen kochgefäßtypspezifisch einzustellen.

7. Heizeinrichtung nach Anspruch 6, **dadurch gekennzeichnet, dass**
- die Heizeinrichtung eine Induktionsheizeinrichtung ist, die ein mittelfrequentes magnetisches Wechselfeld erzeugt, welches zur Erwärmung des Kochgefäßes dient, wobei bei der Erzeugung des magnetischen Wechselfelds entstehende Schaltflanken zur Anregung des Schwingkreises dienen.

8. Heizeinrichtung nach Anspruch 6 oder 7, **dadurch gekennzeichnet, dass**
- die Heizeinrichtung eine Empfangseinrichtung umfasst, die von dem Schwingkreis erzeugte Signale empfängt.

9. Kochsystem, umfassend:
- ein Kochgefäß nach einem der Ansprüche 1 bis 5 und
- eine Heizeinrichtung nach einem der Ansprüche 6 bis 8.

## Claims

1. A cooking vessel (100a, 100b) which is of a prespecified cooking vessel type, comprising:
- a cooking vessel type encoding device which encodes the cooking vessel type of the cooking vessel, wherein
- the cooking vessel type encoding device is a passive, electrical resonant circuit (110), with a resonant frequency of the resonant circuit encoding the cooking vessel type of the cooking vessel,
**characterized in that**
- the resonant circuit is a thin-film structure or a thick-film structure, in particular arranged on the cooking vessel base.

2. The cooking vessel according to claim 1, **characterized in that** the resonant circuit is an LC resonant circuit.

3. The cooking vessel according to any one of the preceding claims, **characterized in that** a cooking vessel base has an electrically insulating layer, wherein a conductive path structure forming the resonant circuit is arranged on, in particular printed on, the electrically insulating layer.

4. The cooking vessel according to any one of the preceding claims, **characterized in that** the resonant circuit comprises a capacitor as a discrete component.

5. The cooking vessel according to any one of the preceding claims, **characterized in that** the cooking vessel has an inner shell and an outer shell, the inner shell being inductively heatable, and the outer shell being at least partially composed of thermally and electrically insulating material, with the resonant circuit being formed from a conductive material on a surface of the outer shell which is composed of the
electrically insulating material and which faces the inner shell.

6. A heating device for heating a cooking vessel according to any one of claims 1 to 5,
- wherein the heating device is designed to determine the resonant frequency of the resonant circuit and to identify the cooking vessel type from the determined resonant frequency,
**characterized in that**
- the heating device is further designed to set heating parameters in a cooking vessel type-specific manner depending on the identified cooking vessel type in the form of a control frequency, in the form of a control amplitude and/or in the form of calibration variables.

7. The heating device according to claim 6, **characterized in that**
- the heating device is an induction heating device which generates a medium-frequency alternating magnetic field which is used to heat the cooking vessel, with switching edges which are produced when the alternating magnetic field is generated being used to excite the resonant circuit.

8. The heating device according to claim 6 or 7, **characterized in that**
- the heating device comprises a receiving device which receives signals that are generated by the resonant circuit.

9. A cooking system comprising:
- a cooking vessel according to any one of claims 1 to 5, and
- a heating device according to any one of claims 6 to 8.

## Revendications

1. Récipient de cuisson (100a, 100b) appartenant à un type de récipient de cuisson prédéfini, comprenant :
- un dispositif de code de type de récipient de cuisson codant le type de récipient de cuisson du récipient de cuisson ;
- le dispositif de code de type de récipient de cuisson est un circuit d'oscillation électrique (110) passif, une fréquence de résonance du circuit d'oscillation codant le type de récipient de cuisson du récipient de cuisson ;
**caractérisé en ce que** :
- le circuit d'oscillation prend la forme d'une structure en couche mince ou d'une structure en couche épaisse, notamment au niveau du fond du récipient de cuisson.

2. Récipient de cuisson selon la revendication 1, **caractérisé en ce que** le circuit d'oscillation est un circuit d'oscillation LC.

3. Récipient de cuisson selon l'une quelconque des revendications précédentes, **caractérisé en ce qu'**un fond du récipient de cuisson comporte une couche électriquement isolante, une structure de piste conductrice étant appliquée sur la couche électriquement isolante, notamment comprimée sur elle, et formant le circuit d'oscillation.

4. Récipient de cuisson selon l'une quelconque des revendications précédentes, **caractérisé en ce que** le circuit d'oscillation comprend un condensateur prenant la forme d'un composant distinct.

5. Récipient de cuisson selon l'une quelconque des revendications précédentes, **caractérisé en ce que** le récipient de cuisson comporte une coque intérieure et une coque extérieure, la coque intérieure peut être réchauffée de façon inductive et la coque extérieure au moins en partie à partir de matière thermiquement et électriquement isolante, le circuit d'oscillation est formé à partir d'une matière conductrice sur une surface de la coque extérieure composée de la matière électriquement isolante et est orienté vers la coque intérieure.

6. Dispositif de chauffage servant au réchauffage d'un récipient de cuisson selon l'une quelconque des revendications 1 à 5 :
- le dispositif de chauffage étant réalisé pour déterminer la fréquence de résonance du circuit d'oscillation et pour calculer le type de récipient de cuisson à partir de la fréquence de résonance déterminée ;
**caractérisé en ce que** :
- le dispositif de chauffage est réalisé en outre pour régler de façon spécifique au type de récipient de cuisson les paramètres de chauffage sous la forme d'une fréquence d'excitation, sous la forme d'une amplitude d'excitation et/ou sous la forme de grandeurs étalonnées, en fonction du type de récipient de cuisson déterminé.

7. Dispositif de chauffage selon la revendication 6, **caractérisé en ce que**
- le dispositif de chauffage est un dispositif de chauffage à induction produisant un champ magnétique cyclique de fréquence moyenne servant au réchauffement du récipient de cuisson, sachant qu'en cas de production du champ magnétique cyclique, les flancs de commutations crées servent à l'excitation du circuit d'oscillation.

8. Dispositif de chauffage selon la revendication 6 ou 7, **caractérisé en ce que**
- le dispositif de chauffage comprend un dispositif de réception recevant les signaux produits par le circuit d'oscillation.

9. Système de cuisson, comprenant :
- un récipient de cuisson selon l'une quelconque des revendications 1 à 5 ; et
- un dispositif de chauffage selon l'une quelconque des revendications 6 à 8.
